# EUROPÄISCHE PATENTSCHRIFT

(11) **EP 1 729 008 B1**
(45) Veröffentlichungstag und Bekanntmachung des Hinweises auf die Patenterteilung: **04.06.2008**
(21) Anmeldenummer: 06006942.4
(22) Anmeldetag: 31.03.2006
(51) Int. Cl.: F04B 17/04, F04B 13/00, F04B 49/06, F04B 49/12, F04B 49/20

(54) **Verfahren zum Betreiben einer Dosierpumpe, insbesondere zum Fördern von Brennstoff für ein Fahrzeugheizgerät**
Method for driving a dosing pump, in particular for pumping a combustible of a vehicle heater
Procédé pour opérer une pompe à dosage, en particulier pour pomper un combustible d'un chauffage de vehicule

(30) Priorität: 31.05.2005 DE 102005024858
(43) Veröffentlichungstag der Anmeldung: 06.12.2006
(73) Patentinhaber: J. Eberspächer GmbH & Co. KG, 73730 Esslingen (DE)
(72) Erfinder: Bächner, Stefan, 73650 Winterbach (DE); Brodbeck, Oliver, 72555 Metzingen-Neuhausen (DE)
(74) Vertreter: Ruttensperger, Bernhard

(56) Entgegenhaltungen:
- CH-A- 675 312
- DE-A1- 10 109 412
- DE-A1- 10 152 782
- DE-A1- 10 158 207
- DE-A1- 19 918 930
- US-A- 4 787 823
- US-A- 2003 021 693

## Beschreibung

Die vorliegende Erfindung betrifft ein Verfahren zum Betreiben einer Dosierpumpe, insbesondere zum Fördern von Brennstoff für ein Fahrzeugheizgerät, welche Dosierpumpe einen zum Fördern zwischen zwei Endstellungen hin- und herbewegbaren Kolben und eine diesem zugeordnete, durch Anlegen einer Spannung elektrisch erregbare Antriebseinheit umfasst.

Derartige beispielsweise in Zuordnung zu Kraftfahrzeugheizgeräten eingesetzte Dosierpumpen werden zum Fördern von Brennstoff im Betrieb allgemein periodisch betrieben. Dies bedeutet, dass der Kolben sich mit einer gewissen Frequenz hin und her bewegt, wobei aufgrund der Tatsache, dass das bei jedem Kolbenhub geförderte Fluidvolumen im Wesentlichen festgelegt ist, durch Ändern der Bewegungsfrequenz die geförderte Menge beeinflussbar ist. Im Allgemeinen liegt die Bewegungsfrequenz bei etwa 3 bis 10 Hüben pro Sekunde. Die Bewegung des Kolbens zumindest in einer Bewegungsrichtung wird dabei durch Anlegen einer Spannung an die elektrisch erregbare Antriebseinheit, beispielsweise eine Magnetspule, erlangt. Dabei besteht grundsätzlich das Problem, dass bei dieser Erregung der Kolben die Endstellung, in welche er bewegt werden soll, im Allgemeinen sehr spontan erreicht und er an einem Anschlag zur Anlage kommt. Dies ist in einem Fahrzeug akustisch und haptisch wahrnehmbar und im Allgemeinen unerwünscht. Würde eine derartige Dosierpumpe so betrieben werden, dass der Kolben langsamer bewegt wird, um einen sanfteren Anschlag zu erlangen, bzw. nur kürzer mit einer Kraft beaufschlagt wird, um den Anschlag vollständig zu vermeiden, so würde sich dies nachteilhaft auf die Bewegungsfrequenz des Kolbens auswirken bzw. auch die pro Hub geförderte Fluidmenge beeinflussen.

Die DE 101 58 207 A1 offenbart ein Verfahren zum Betreiben einer als Magnetkolbenpumpe aufgebauten Dosierpumpe, bei welchem Verfahren vor dem eigentlichen Pumpbetrieb an die Spule der Magnetkolbenpumpe eine Spannung angelegt wird, um diese vorzuwärmen. Nach Abschluss einer Vorwärm phase kann dann die Pumpe durch Anlegen von Rechteckimpulsen getaktet betrieben werden.

Die US 2003/0021693 A1 offenbart ein Verfahren zum Steuern eines Kompressors, bei welchem Kompressor ein Hubkolben durch einen Linearmotor im Resonanzbetrieb hin und her bewegbar ist. Das Fördervolumen wird durch Beeinflussung des Kolbenhubs bestimmt. Der Linearmotor wird zum Einstellen eines gewünschten Fördervolumens bzw. eines gewünschten Kolbenhubs unter Berücksichtigung des zeitlichen Abstands zwischen dem Erreichen einer bestimmten Referenzposition durch den Hubkolben bei aufeinanderfolgenden Bewegungszyklen eingestellt.

Es ist die Aufgabe der vorliegenden Erfindung, ein Verfahren zum Betreiben einer Dosierpumpe bereitzustellen, mit dem das Betriebsverhalten verbessert werden kann.

Gemäß einem ersten Aspekt der Erfindung wird diese Aufgabe gelöst durch ein Verfahren zum Betreiben einer Dosierpumpe, insbesondere zum Fördern von Brennstoff für ein Fahrzeugheizgerät, welche Dosierpumpe einen zum Fördern zwischen zwei Endstellungen hin- und herbewegbaren Kolben und eine diesem zugeordnete, durch Anlegen einer Spannung elektrisch erregbare Antriebseinheit umfasst, wobei das Verfahren die Maßnahmen umfasst:
- a): Anlegen einer Spannung zum Bewegen des Kolbens in Richtung zu einer Endstellung während Erregungszeitinvervallen, wobei ein Gesamtfördervolumen der Dosierpumpe durch eine Taktfrequenz, mit welcher Erregungszeitinvervalle aufeinander folgen, bestimmt wird,
- b): Bestimmen, ob der Kolben während eines Erregungszeitintervalls eine Position bei oder nahe einer Endstellung erreicht hat, und Ermitteln des Zeitpunkts während des Erregungszeitintervalls, zu dem der Kolben die Position bei oder nahe der Endstellung erreicht hat,
- c): Vergleichen des im Schritt b) ermittelten Zeitpunkts mit einer Referenz,
- d): dann, wenn der Abstand des Zeitpunkts zu der Referenz über einer vorbestimmten Schwelle liegt, Anlegen einer veränderten Spannung zum Verschieben des Zeitpunkts in Richtung zu der vorbestimmten Referenz.

Durch das Ermitteln des Zeitpunkts, zu dem der Kolben eine bestimmte Endstellung erreicht hat oder sich nahe dieser Endstellung befindet und das Beeinflussen der Ansteuermaßnahmen derart, dass dieser Zeitpunkt sich im Bereich einer vorbestimmten Referenz einstellt, kann sichergestellt werden, dass einerseits das gewünschte, durch den konstruktiven Aufbau der Dosierpumpe vorgegebene Fluidvolumen gefördert wird, andererseits aber die Anschlagwucht beim Erreichen der Endstellung gemindert wird und somit auftretende Geräusche bzw. Vibrationen gemindert werden können.

Beispielsweise kann bei dem erfindungsgemäßen Verfahren so vorgegangen werden, dass die Maßnahme b) für ein Erregungszeitintervall ergriffen wird, das auf dasjenige Erregungszeitintervall folgt, in welchem durch Durchführung der Maßnahmen a) bis c) der Zeitpunkt ermittelt und mit der Referenz verglichen worden ist. Das heißt, es wird zunächst in einem einem bestimmten Förderhub zuzuordnenden Erregungszeitintervall festgestellt, wo bezogen auf die Referenz der Zeitpunkt liegt, um dann in einem nachfolgenden Erregungszeitintervall durch entsprechend geänderte Ansteuerung dafür Sorge zu tragen, dass, sofern erforderlich, der Zeitpunkt sich in gewünschter Weise verschiebt. Selbstverständlich kann dann in dem nachfolgenden Erregungszeitintervall erneut durch Durchführung der Maßnahmen a) bis c) überprüft werden, ob die gewünschte Reaktion erlangt worden ist, um dann in einem weiteren folgenden Erregungszeitintervall ggf. noch einmal eine Beeinflussung der Ansteuerungsmaßnahmen vornehmen zu können.

Um bei der erfindungsgemäßen Vorgehensweise den Aufbau des zu betreibenden System möglichst einfach halten zu können, wird vorgeschlagen, dass im Schritt b) das Erreichen der Position bei oder nahe der Endstellung durch Überwachung des bei Anlegen der Spannung fließenden Stroms erfolgt. Das bedeutet, es sind keine zusätzlichen Sensoren zur Positionsdetektierung erforderlich. Allein aus dem Stromverlauf kann darauf geschlossen werden, ob bereits eine Position bei oder nahe der Endstellung erreicht ist. Dies kann beispielsweise dadurch erfolgen, dass auf Erreichen der Position dann geschlossen wird, wenn der Gradient des zeitlichen Stromverlaufs einen vorbestimmten Bereich oder Wert erreicht. Grundlage hierfür ist, dass der sich bewegende Kolben in der Antriebseinheit eine Gegenreaktion, auslösen kann, welche selbstverständlich einen Einfluss auf den fließenden Strom hat. Hat der Kolben seine Endlage erreicht, liegt diese rückwirkende Beeinflussung nicht mehr vor, was im zeitlichen Verlauf des Stroms erkennbar wird.

Um bei vorhandener Abweichung zwischen dem Zeitpunkt und der Referenz die gewünschte Verschiebung erlangen zu können, wird vorgeschlagen, dass die Maßnahme d) das Verändern der mittleren Spannung zum Verschieben des Zeitpunkts umfasst. Dies kann beispielsweise dadurch erfolgen, dass während eines Erregungszeitintervalls die Spannung wenigstens phasenweise mit einem Tastverhältnis getaktet angelegt wird und dass die Maßnahme b) das Verändern des Tastverhältnisses zum Verschieben des Zeitpunkts umfasst.

Dabei kann so vorgegangen werden, dass dann, wenn der Zeitpunkt bezogen auf die Referenz zu spät liegt, das Tastverhältnis erhöht wird, und dann, wenn der Zeitpunkt bezogen auf die Referenz zu früh liegt, das Tastverhältnis gesenkt wird. Grundlage davon ist, dass ein Erhöhen des Tastverhältnisses zu einer höheren mittleren Spannung führt, wobei hier beispielsweise auf das arithmetische Mittel der Spannung zurückgegriffen werden kann, während ein Verringern des Tastverhältnisses entsprechend die mittlere anliegende Spannung senkt. Eine höhere mittlere anliegende Spannung wiederum hat zur Folge, dass die den Kolben beaufschlagende Kraft entsprechend erhöht ist und somit der Kolben stärker beschleunigt wird. Infolge dessen wird dieser auch seine Endlage früher erreichen. Eine niedrigere mittlere Spannung hat eine entsprechend geringere Kraft und entsprechend geringere Beschleunigung des Kolbens zur Folge, was dazu führt, dass der Kolben seine Endlage später erreichen wird.

Die bei der Maßnahme c) verwendete Referenz kann ein Zeitpunkt oder Zeitbereich nahe dem Ende des Erregungszeitintervalls sein. Dies ist daher vorteilhaft, da somit auch dann, wenn der Zeitpunkt nach der Referenz, jedoch noch vor dem Ende des Erregungszeitintervalls liegt, auch in einem Falle, in welchem die Endlage zu spät erreicht wird, geeignete Veränderung der Ansteuerungsmaßnahmen ergriffen werden können, da tatsächlich die Endlage bzw. das Erreichen der Endlage noch erfassbar ist.

Beispielsweise kann vorgesehen sein, dass bei der Maßnahme d) das Ausmaß, in welchem die Spannung verändert wird, vom Abstand des Zeitpunkts zu der Referenz abhängt.

Gemäß einem weiteren Aspekt kann bei dem Verfahren zum Betreiben einer Dosierpumpe, insbesondere zum Fördern von Brennstoff für ein Fahrzeugheizgerät, welche Dosierpumpe einen zum Fördern zwischen zwei Endstellungen hin- und herbewegbaren Kolben und eine diesem zugeordnete, durch Anlegen einer Spannung elektrisch erregbare Antriebseinheit umfasst, wobei bei dem Verfahren während Erregungszeitintervallen eine Spannung zum Bewegen des Kolbens in Richtung zu einer Endstellung angelegt wird, in einer ersten Phase eines Erregungszeitintervalls eine ungetaktete Spannung angelegt werden und in einer daran anschließenden zweiten Phase eine getaktete Spannung mit einem Tastverhältnis angelegt werden.

Bei diesem Aspekt wird durch das Anlegen einer ungetakteten Spannung während der ersten Phase dafür gesorgt, dass der Kolben möglichst schnell in Bewegung gesetzt wird, während dann, wenn er in Bewegung gesetzt ist, durch Anlegen einer getakteten Spannung diese Bewegung in bestimmter Art und Weise vorgegeben werden kann.

Dabei wird vorgeschlagen, dass nach Beginn der ersten Phase ein Startzeitpunkt ermittelt wird, zu dem der Kolben beginnt, sich zu bewegen, und dass das Ende der ersten Phase in Abhängigkeit von dem ermittelten Startzeitpunkt festgelegt wird. Vorzugsweise wird dabei so vorgegangen, dass das Ende der ersten Phase so festgelegt wird, dass es im Bereich des Startzeitpunkts liegt.

Da auch bei dieser erfindungsgemäßen Verfahrensweise im Allgemeinen der Kolben intermittierend bewegt wird, um aufeinander folgende Bewegungschübe durchzuführen, wird weiter vorgeschlagen, dass nach Ermitteln des Startzeitpunkts in einem Erregungszeitinervall die Länge der ersten Phase für ein folgendes Erregungszeitintervall in Abhängigkeit von dem ermittelten Startzeitpunkt festgelegt wird. Es kann also ein Erregungszeitintervall als Messintervall betrachtet werden, während in dem dann folgenden Zeitintervall das Ergebnis der Messung in eine entsprechend veränderte Ansteuerung umgesetzt werden kann.

Auf das Vorsehen irgendwelcher die Bewegung des Kolbens detektierender Positionssensoren kann dann verzichtet werden, wenn der Startzeitpunkt durch Überwachen des bei angelegter Spannung fließenden Stroms ermittelt wird. Auch hier kann wieder so vorgegangen werden, dass dann, wenn der Gradient des zeitlichen Stromverlaufs einen vorbestimmten Bereich oder Wert erreicht, darauf geschlossen wird, dass der Kolben begonnen hat, sich zu bewegen. Die Grundlage dieses Aspekts ist wieder, dass ein sich bewegender Kolben aufgrund der elektromagnetischen Wechselwirkung eine Rückwirkung auf die Antriebseinheit und den in dieser fließenden Strom hat, welche Rückwirkung durch Überwachung des Stroms erfassbar ist.

Selbstverständlich können die beiden vorangehend angesprochenen Erfindungsaspekte des Bestimmens des Zeitpunkts, zu dem der Kolben sich zu bewegen beginnt, einerseits und des Bestimmens des Zeitpunkts, zu dem der Kolben eine Endlage erreicht andererseits mit den jeweils zugeordneten vorteilhaften Aspekten kombiniert werden.

Die vorliegende Erfindung wird nachfolgend mit Bezug auf die beiliegenden Zeichnungen beschrieben. Es zeigt:
- Fig. 1: den prinzipiellen Aufbau eines Fahrzeugheizsystems mit einer Dosierpumpe zum Fördern von flüssigem Brennstoff;
- Fig. 2: in ihren Diagrammen a), b), c) jeweils verschiedene zeitliche Verläufe des bei Anlegen einer Spannung sich ergebenden Stroms;
- Fig. 3: ein der Fig. 2a) entsprechendes Messdiagramm;
- Fig. 4: ein der Fig. 2b) entsprechendes Messdiagramm.

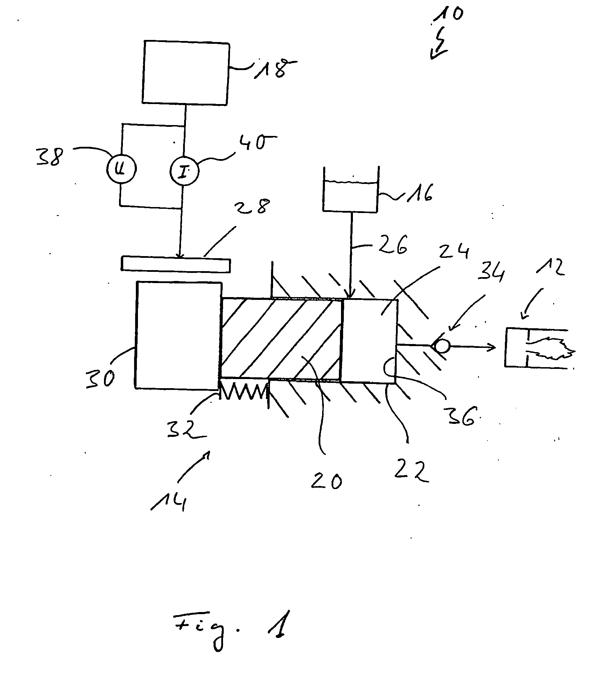

In Fig. 1 ist ein Heizsystem für ein Fahrzeug allgemein mit 10 bezeichnet. Dieses Heizsystem 10 umfasst einen nur schematisch dargestellten Brenner 12, beispielsweise Verdampferbrenner, welchem durch eine Dosierpumpe 14 flüssiger Brennstoff von einem Brennstoffreservoir 16 zugeführt wird. Dazu steht die Dosierpumpe 14, ebenso wie sonstige zu betreibende Systembereiche des Brenners 12, unter der Ansteuerung einer Ansteuervorrichtung 18.

Die Dosierpumpe 14 umfasst einen Kolben 20, der in einem Zylinder 22 zwischen zwei Endstellungen hin und her bewegbar ist. In der in der Fig. 1 dargestellten Endstellung ist das Volumen einer Pumpkammer 24 maximal und eine vom Brennstoffreservoir 16 heran führende Leitung 26 ist zur Pumpkammer 24 offen. Durch Erregen einer als Antriebseinheit wirkenden Spule 28 wird ein mit dem Kolben 20 fest verbundener Anker 30, und somit selbstverständlich auch der Kolben 20, in Richtung Verringerung des Pumpkammervolumens in der Darstellung der Fig. 1 nach rechts entgegen der Vorspannwirkung einer Rückstellfeder 32 verschoben. Dabei schließt nach kurzem Bewegungshub der Kolben 20 die Leitung 26 ab, und der im verbleibenden Volumen der Pumpkammer 24 enthaltene flüssige Brennstoff wird über ein Rückschlagventil 34 in Richtung zum Brenner 12 ausgestoßen. Dabei bewegt sich der Kolben 20 beispielsweise so lange, bis er am Bodenbereich 36 des Zylinders 22 anstößt oder bis ein sonstiger Anschlag wirksam wird. Wird die Erregung der Spule 28 beendet, so bewegt sich der Kolben 20 zusammen mit dem Anker 30 unter der Rückstellwirkung der Feder 32 zurück in die in Fig. 1 dargestellte Endstellung.

Die Erregung der Spule 28 erfolgt im Allgemeinen durch Anlegen einer Spannung. Da eine derartige Dosierpumpe 14 im Allgemeinen getaktet betrieben wird, also pro Arbeitstakt ein durch die geometrischen Vorgaben bestimmtes Volumen an flüssigem Brennstoff in Richtung Brenner 12 gefördert wird, wird das Gesamtfördervolumen einer derartigen Dosierpumpe 12 durch die Taktfrequenz dieser getakteten Betriebsweise bestimmt. Im Allgemeinen ist es bekannt, derartige Dosierpumpen mit drei bis zehn Hüben pro Sekunde zu betreiben.

Die Verschiebung des Kolbens 20 mit dem Anker 30 in Richtung Verringerung des Pumpkammervolumens 24 erfolgt, wie bereits angesprochen, durch Anlegen einer Spannung an die Spule 28 während jeweiliger Erregungszeitintervalle. Dabei wird die Spannung im Allgemeinen mit einem bestimmten Tastverhältnis gepulst angelegt, zumindest während eines Teilbereichs eines derartigen Erregungszeitintervalls. Dies bedeutet, dass mit einer beispielsweise fest vorgegebenen Frequenz die Spannung an die Spule 28 angelegt wird, und die sich dann ergebende oder gewünschte mittlere Spannung durch Einstellen bzw. Variieren der An-Zeit und der Aus-Zeit während eines jeweiligen Pulses eingestellt wird, wobei zum Erhalt einer fest vorgegebenen Pulsfrequenz bzw. Pulsdauer die Summe aus An-Zeit und Aus-Zeit grundsätzlich gleich ist.

Bei dem erfindungsgemäßen System 10 werden sowohl die an die Spule 28 angelegte Spannung U als auch der bei angelegter Spannung über die Spule 28 fließende Strom I durch jeweilige Messeinheiten 38, 40 überwacht. Selbstverständlich können diese Messeinheiten 38, 40 in die Ansteuervorrichtung 18 integriert sein und in dieser mit der Spannung U bzw. dem Strom I korrelierte Messwerte bereitstellen.

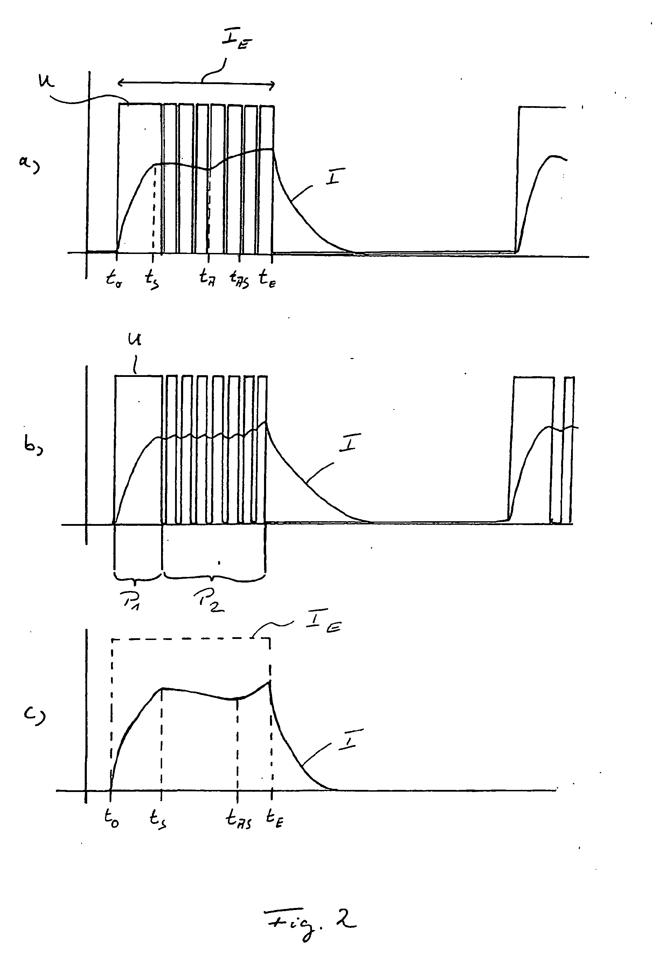

Der Betrieb einer derartigen Dosierpumpe 14 wird nachfolgend mit Bezug auf Fig. 2 beschrieben. Man erkennt zunächst in Fig. 2a) ein derartiges Erregungszeitintervall I_{E}, dessen Gesamtdauer bei beispielsweise 40 ms liegen kann. Das Erregungszeitintervall I_{E} beginnt zu einem Zeitpunkt t₀, zu dem an die Spule 28 die Spannung U angelegt wird. Diese Spannung kann beispielsweise die aus dem Bordspannungssystem abgegriffene verfügbare Spannung sein. Aus der Stromkurve I erkennt man, dass zunächst der Strom stark ansteigt, und zwar bis zu einem Startzeitpunkt t_{S}. Zu diesem Startzeitpunkt t_{S} beginnt der Kolben 28 mit dem Anker 30 sich zu bewegen. Aufgrund der dabei stattfindenden Gegeninduktion in der Spule 28 wird der weitere Stromanstieg begrenzt bzw. der Strom bleibt näherungsweise auf gleichem Niveau.

Wie in Fig. 2b) erkennbar, kann während einer ersten Phase P₁ des Erregungszeitintervalls I_{E} die Spannung U konstant gehalten, also nicht getaktet angelegt werden, um dafür zu sorgen, dass aufgrund einer möglichst starken elektromagnetischen Wechselwirkung der Kolben 20 so schnell als möglich beginnt, sich zu bewegen. Wie vorangehend bereits dargelegt, wird zu dem Zeitpunkt t_{S}, zu dem der Kolben 20 sich zu bewegen beginnt, eine deutliche Änderung im Verlauf der Stromkurve auftreten, was sich sehr stark auch im Steigungswert, also im Gradienten deutlich macht. Durch Überwachung des Gradienten des zeitlichen Stromverlaufs kann also darauf geschlossen werden, dass der Kolben 20 begonnen hat, sich zu bewegen. Dies bedeutet, dass bei Überwachung der Kolbenbewegung und damit möglich werdender Festlegung des Zeitpunkts t_{S} während eines Erregungszeitintervalls I_{E} dann für ein nachfolgendes oder mehrere nachfolgende Erregungszeitintervalle I_{E} jeweils der auf diese Art und Weise ermittelte Starteitpunkt t_{S} auch dazu genutzt werden kann, um mit Bezug auf diesen ermittelten Startzeitpunkt t_{S} die mit konstanter Spannung erfolgende Erregung der Spule 28 in der erste Phase P₁ des Erregungszeitintervalls I_{E} zu beenden und in einer dann folgenden zweiten Phase P₂ zu einer gepulsten Erregung überzugehen. Selbstverständlich kann auch während nachfolgender Erregungszeitintervalle I_{E} der Startzeitpunkt t_{S} durch Überwachung des Gradienten der Stromkurve ermittelt werden. Sofern erforderlich, kann dann eine Anpassung des Zeitpunkts, zu dem das Anlegen der konstanten Spannung U beendet wird, stattfinden. Vorzugsweise wird dabei dieses Ende des Anlegens der konstanten Spannung in demjenigen Bereich liegen, in dem auch der Startzeitpunkt t_{S} ermittelt wurde. Beispielsweise kann das Anlegen der konstanten Spannung auch kurz vor oder kurz nach diesem Startzeitpunkt t_{S}, wie er aus einem vorangehenden Erregungszeitintervall I_{E} ermittelt wurde, gewählt werden.

Grundsätzlich sei aber darauf hingewiesen, dass selbstverständlich die Zeitdauer, während welcher in der ersten Phase P₁ eine konstante Spannung angelegt wird, auch in Abhängigkeit von anderen Parametem ausgewählt werden kann bzw. am Beginn des Betreibens der Dosierpumpe als Startwert vorgegeben werden kann. So kann beispielsweise die verfügbare Versorgungsspannung ein Kriterium für die Länge dieser ersten Phase P₁ sein. So kann diese erste Phase P₁ bei 15 V Versorgungsspannung im Bereich von 7 ms liegen, während sie bei 10 V Versorgungsspannung im Bereich von 12 ms liegen kann. Auch die Höhe des Stroms zum Startzeitpunkt t_{S} kann für nachfolgende Erregungszeitintervalle I_{E} als Kriterium zur Festlegung der Länge der ersten Phase P₁ gewählt werden. So kann beispielsweise bei einem Strom von 1,2 A diese erste Phase P₁ 7 ms dauern, während bei 0,9 A diese erste Phase P₁ beispielsweise 12 ms dauern kann. Diese Anpassung beispielsweise an den Strom basiert darauf, dass der über die Spule 28 fließende Strom selbstverständlich von der angelegten Spannung, grundsätzlich aber auch von der Temperatur und somit dem Widerstand der Spule 28 abhängen wird.

Hat zum Startzeitpunkt t_{S} der Kolben 20 mit dem Anker 30 begonnen, sich zu bewegen, wird dann, wie bereits erwähnt, in der zweiten Phase P₂ mit gepulster Spannung gearbeitet. Um hier die Welligkeit des sich ergebenden Stromflusses so gering als möglich zu halten, sollte die Pulsfrequenz dieser PWM-Ansteuerung im Bereich von einigen Kilohertz liegen. Der über die Spule 28 fließende Strom kann dann zur besseren Auswertbarkeit einer Tiefpassfilterung unterzogen werden, so dass sich letztendlich für ein Erregungszeitintervall I_{E} der in Fig. 2c) erkennbare geglättete Verlauf der Stromkurve ergibt. Man erkennt den deutlichen Knick am Startzeitpunkt tₛ, und man erkennt einen weiteren Knick bzw. eine Mulde, bei einem Soll-Aufprallzeitpunkt t_{AS}. Dies ist der Zeitpunkt, zu dem idealerweise der Kolben 20 bei durch die Spule 28 erzwungener Verschiebung seine Endstellung erreicht, also beispielsweise am Boden 36 anstößt. Der Grund für die Änderung in der Stromkurve zu diesem Zeitpunkt liegt wiederum darin, dass ab dem Aufprall der Kolben 20 mit dem Anker 30 sich nicht weiter bewegen wird und insofern auch keine weitere Gegeninduktion in der Spule 28 stattfinden wird. Auch dies kann durch Auswerten des Gradienten des Stromverlaufs I ermittelt werden.

Es sei nun beispielsweise angenommen, dass in der Fig. 2a) ein Erregungszeitintervall I_{E} am Beginn des Betreibens der Dosierpumpe 14 vorliegt. Hier wurden die Zeitdauer, während welcher die Spannung U konstant angelegt wird, also die Zeitdauer der ersten Phase P₁, und auch das Tastverhältnis, das während der zweiten Phase P₂ verwendet wird, auf Startwerte gesetzt. Man erkennt, dass das Tastverhältnis sehr groß ist, also die An-Zeit in dieser zweiten Phase P₂ bei einem jeweiligen Ansteuerimpuls ist deutlich größer, als die Aus-Zeit. Dies führt zu einer entsprechend hohen mittleren Spannung während des zweiten Intervalls P₂, die beispielsweise als der arithmetische Mittelwert bestimmt werden kann. Eine hohe Spannung hat jedoch auch eine große elektromagnetische Krafteinwirkung auf den Anker 30 zur Folge, so dass dieser mit dem Kolben 20 sehr schnell verschoben wird und bereits zu einem Aufprallzeitpunkt t_{A} seine Endstellung erreicht, also beispielsweise am Boden 36 anschlägt. Da die Zeitdauer eines Erregungszeitintervalls I_{E} im Allgemeinen fest vorgegeben ist, bedeutet dies, dass noch über eine vergleichsweise lange Zeit nach dem Zeitpunkt t_{A} die Spule 28 erregt wird, ohne dass dies eine Änderung des Bewegungszustands des Kolbens 20 zur Folge hätte. Dieses Aufprallen des Kolbens 20 auf den Boden 36 und das weiterhin unveränderte Erregen der Spule 28 führen nicht nur zu einem unnötigen Energieverbrauch, sondern auch zu nicht gewünschten Anschlaggeräuschen.

Es wird erfindungsgemäß daher für den Kolben 20 ein Soll-Aufprallzeitpunkt t_{AS} vorgegeben, der eine vorbestimmte Zeitdauer vor dem Endzeitpunkt t_{E} eines Erregungszeitintervalls I_{E} liegt, beispielsweise bei einer Gesamtzeitdauer von 40 ms 5 ms vor dem Endzeitpunkt t_{E} liegen kann.

Wird nun erkannt, dass der tatsächliche Aufprallzeitpunkt t_{A} nicht nahe am Soll-Aufprallzeitpunkt t_{AS} liegt, also beispielsweise einen vorbestimmten Schwellenabstand zu diesem überschreitet, so wird in der Ansteuervorrichtung 28 durch Beeinflussen des Tastverhältnisses eine Verschiebung des Aufprallzeitpunkts t_{A} erzwungen. In dem in Fig. 2a) dargestellten Fall, also einem Fall, in welchem der Kolben 20 sich tatsächlich zu schnell bewegt hat, was die Folge einer zu hohen mittleren Spannung war, wird durch Verringern des Tastverhältnisses diese mittlere Spannung und somit auch die auf den Kolben 20 bzw. den damit fest verbundenen Anker 30 einwirkende Kraft gesenkt. Dies führt dann zu dem in den Fig. 2b) bzw. 2c) in geglätteter Form dargestellten Stromverlauf I, bei dem die das Anhalten des Kolbens 20 indizierende Variation des Gradienten des Stromverlaufs tatsächlich auch im Bereich des Soll-Aufprallzeitpunkts t_{AS} liegt.

Da der Soll-Aufprallzeitpunkt t_{AS} nicht identisch mit dem Endzeitpunkt t_{E} eines Erregungszeitintervalls I_{E} gewählt wurde, ist dafür gesorgt, dass auch dann, wenn beispielsweise bedingt durch äußere Umstände die am Beginn des Betreibens einer Dosierpumpe 14 gewählten Parameter, insbesondere das Tastverhältnis, nicht ausreichend waren, um den Kolben 20 genügend schnell zu verschieben, also ein Fall vorliegt, in dem der Aufprallzeitpunkt t_{A} nach dem Soll-Aufprallzeitpunkt t_{AS} liegt, geeignete Variationen am Tastverhältnis vorgenommen werden können, um durch Erhöhen desselben eine Verschiebung des Aufprallzeitpunkts t_{A} nach vorne zu erlangen.

Es ist selbstverständlich, dass die in einem Erregungszeitintervall I_{E} ermittelte Lage des Aufprallzeitpunkts t_{A} und der Vergleich mit dem Soll-Aufprallzeitpunkt t_{As} mit der Erkenntnis, dass bestimmte Ansteuermaßnahmen erforderlich sind, dann in einem folgenden Erregungszeitintervall I_{E} jeweils durch Verwenden eines veränderten Tastverhältnisses genutzt werden können. So kann in jedem Erregungszeitintervall I_{E} der Aufprallzeitpunkt t_{A} bestimmt werden, und in einem nachfolgenden Erregungszeitintervall I_{E} können dann die veränderten Ansteuermaßnahmen genutzt werden, um die gewünschte Verschiebung zu erzwingen.

Bei der erfindungsgemäßen Vorgehensweise zum Ansteuern einer Dosierpumpe 14 wird also der Aufprallzeitpunkt t_{A} unter Einsatz einer Regelschleife in Richtung zu einem Soll-Aufprallzeitpunkt verschoben, um auf diese Art und Weise eine unnötig andauernde Erregung zu verhindern und auch die auftretenden Aufschlaggeräusche mindern zu können. Dabei kann so vorgegangen werden, dass, je größer der Abstand des Aufprallzeitpunkts t_{A} vom Soll-Aufschlagzeitpunkt t_{AS} ist, desto stärkere Variationen im Tastverhältnis vorgenommen werden. Auf diese Art und Weise kann eine schnelle, gleichwohl jedoch auch feinfühlige Heranführung in Richtung zum Soll-Aufprallzeitpunkt t_{AS} erlangt werden. Dabei kann beispielsweise auch um den Soll-Aufprallzeitpunkt t_{AS} herum ein bestimmtes Intervall definiert sein, innerhalb welchen keine Variationen in der Ansteuerung vorgenommen werden, um ein hin und her Schwanken des Aufprallzeitpunkts t_{A} durch ständiges Verändern der Ansteuermaßnahmen zu verhindern. Wird beispielsweise festgestellt, dass während eines Erregungszeitintervalls I_{E} überhaupt kein Aufprall stattgefunden hat, also die anliegende mittlere Spannung nicht gereicht hat, um den Kolben 20 bis zu seinem Anschlag zu bewegen, so kann in einem dann folgenden Erregungszeitintervall I_{E} beispielsweise auch in der zweiten Phase P₂ die Spannung ungetaktet angelegt werden, was einem Tastverhälttnis von 1 entspricht. Es wird dann die maximale mittlere Spannung, die der angelegten Spannung entspricht, bereitgestellt und daher auch der Kolben mit maximaler Kraft verschoben. Führt dies dazu, dass der Aufprallzeitpunkt t_{A} dann im folgenden Erregungszeitintervall I_{E} liegen soll, und zwar auch vor dem Soll-Aufprallzeitpunkt t_{AS}, dann wieder das Tastverhältnis verringert werden kann, um sukzessive den Aufprallzeitpunkt t_{A} nach hinten zu verschieben.

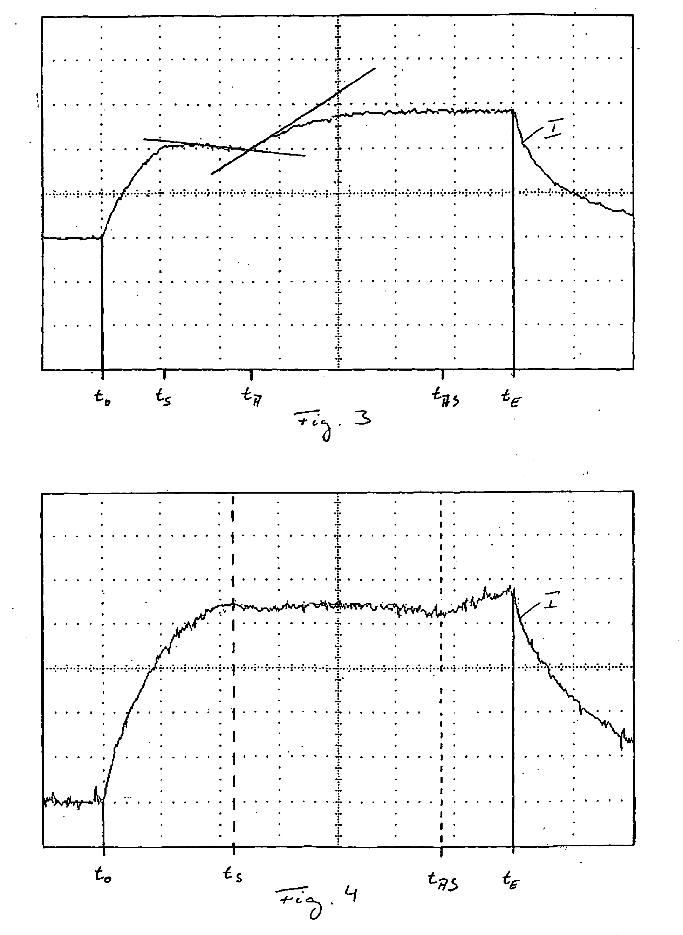

Die Fig. 3 und 4 zeigen zwei Messdiagramme, in welchen jeweils der zeitliche Verlauf des Stroms I durch die Spule 28 hindurch während eines Erregungszeitintervalls, also zwischen den Zeitpunkten t₀ und t_{E}, aufgetragen ist. Man erkennt in Fig. 3 zunächst wieder zum Zeitpunkt t_{S}, also zum Startzeitpunkt der Bewegung des Kolbens 20 den deutlichen Knick in der Stromkurve. Wird also der Gradient ausgewertet, so wird es dadurch erkennbar, dass dieser einen bestimmten Schwellenwert unterschreitet. Es kann dann also auf das Beginnen der Verschiebebewegungen des Kolbens 20 geschlossen werden und somit in einem nachfolgenden Erregungszeitintervall dann die Dauer der ersten Phase angepasst werden. Der Aufprall erfolgt in dem in Fig. 3 dargestellten Fall vergleichsweise früh zum Zeitpunkt t_{A}. Man erkennt hier anhand der beiden den Stromverlauf nähernden Geraden zu diesem Zeitpunkt t_{A} die deutliche Änderung im Gradienten des Stromverlaufs, wobei hier so vorgegangen werden kann, dass dann, wenn der Gradient einen bestimmten Schwellenwert überschreitet, auf das Vorliegen des Aufprallzeitpunkts t_{A} geschlossen wird.

Da in dem in Fig. 3 dargestellten Fall der Aufprallzeitpunkt t_{A} deutlich vor dem Soll-Aufprallzeitpunkt t_{AS} liegt, wurde im Übergang zur Messkurve der Fig. 4 das Tastverhältnis verringert, so dass entsprechend dann auch der Kolben 20 mit geringerer Kraft beaufschlagt wurde. Der Aufprallzeitpunkt liegt hier beim Soll-Aufprallzeitpunkt t_{AS}, was wiederum durch einen Knick in der Stromkurve nach oben erkennbar ist. Dieser Aufprall erfolgt also kurz vor dem Ende des Erregungszeitintervalls.

Es sei abschließend darauf hingewiesen, dass selbstverständlich die erfindungsgemäße Vorgehensweise auch zum Einsatz kommen kann bei Systemen, bei welchen die Spule 28 nicht gepulst erregt wird. Auch das Anlegen einer konstanten, gleichwohl jedoch variierbaren Spannung führt dazu, dass die an der Spule anliegende Spannung und damit auch die auf den Anker 30 einwirkende magnetische Kraft verändert werden können, mit der Folge, dass auch die Bewegungsgeschwindigkeit des Kolbens 20 angepasst werden kann.

## Patentansprüche

1. Verfahren zum Betreiben einer Dosierpumpe, insbesondere zum Fördern von Brennstoff für ein Fahrzeugheizgerät, welche Dosierpumpe (14) einen zum Fördern zwischen zwei Endstellungen hin- und herbewegbaren Kolben (20) und eine diesem zugeordnete, durch Anlegen einer Spannung (U) elektrisch erregbare Antriebseinheit (28, 30) umfasst, wobei das Verfahren die Maßnahmen umfasst:
a) Anlegen einer Spannung (U) zum Bewegen des Kolbens (20) in Richtung zu einer Endstellung während Erregungszeitinvervallen (I_{E}), wobei ein Gesamtfördervolumen der Dosierpumpe durch eine Taktfrequenz, mit welcher die Erregungszeitintervalle aufeinander folgen, bestimmt wird,
b) Bestimmen, ob der Kolben (20) während eines Erregungszeitintervalls (I_{E}) eine Position bei oder nahe einer Endstellung erreicht hat, und Ermitteln des Zeitpunkts (t_{A}) während des Erregungszeitintervalls (I_{E}), zu dem der Kolben (20) die Position bei oder nahe der Endstellung erreicht hat,
c) Vergleichen des im Schritt b) ermittelten Zeitpunkts (t_{A}) mit einer Referenz (t_{AS}),
d) dann, wenn der Abstand des Zeitpunkts (t_{A}) zu der Referenz (t_{AS}) über einer vorbestimmten Schwelle liegt, Anlegen einer veränderten Spannung zum Verschieben des Zeitpunkts (t_{A}) in Richtung zu der vorbestimmten Referenz (t_{AS}).

2. Verfahren nach Anspruch 1,
**dadurch gekennzeichnet, dass** die Maßnahme b) für ein Erregungszeitintervall (I_{E}) ergriffen wird, das auf dasjenige Erregungszeitintervall (I_{E}) folgt, in welchem durch Durchführung der Maßnahmen a) bis c) der Zeitpunkt (t_{A}) ermittelt und mit der Referenz (t_{AS}) verglichen worden ist.

3. Verfahren nach Anspruch 1 oder 2,
**dadurch gekennzeichnet, dass** im Schritt b) das Erreichen der Position bei oder nahe der Endstellung durch Überwachung des bei Anlegen der Spannung (U) fließenden Stroms (I) erfolgt.

4. Verfahren nach Anspruch 3,
**dadurch gekennzeichnet, dass** auf Erreichen der Position dann geschlossen wird, wenn der Gradient des zeitlichen Stromverlaufs einen vorbestimmten Bereich oder Wert erreicht.

5. Verfahren nach einem der Ansprüche 1 bis 4,
**dadurch gekennzeichnet, dass** die Maßnahme d) das Verändern der mittleren Spannung zum Verschieben des Zeitpunkts (t_{A}) umfasst.

6. Verfahren nach einem der Ansprüche 1 bis 5,
**dadurch gekennzeichnet, dass** während eines Erregungszeitintervalls (I_{E}) die Spannung (U) wenigstens phasenweise mit einem Tastverhältnis getaktet angelegt wird und dass die Maßnahme b) das Verändern des Tastverhältnisses zum Verschieben des Zeitpunkts (t_{A}) umfasst.

7. Verfahren nach Anspruch 6,
**dadurch gekennzeichnet, dass** dann, wenn der Zeitpunkt (t_{A}) bezogen auf die Referenz (t_{AS}) zu spät liegt, das Tastverhältnis erhöht wird, und dann, wenn der Zeitpunkt (t_{A}) bezogen auf die Referenz (t_{AS}) zu früh liegt, das Tastverhältnis gesenkt wird.

8. Verfahren nach einem der Ansprüche 1 bis 7,
**dadurch gekennzeichnet, dass** die bei der Maßnahme c) verwendete Referenz (t_{AS}) ein Zeitpunkt oder ein Zeitbereich nahe dem Ende des Erregungszeitintervalls (I_{E}) ist.

9. Verfahren nach einem der Ansprüche 1 bis 8,
**dadurch gekennzeichnet, dass** bei der Maßnahme d) das Ausmaß, in welchem die Spannung (U) verändert wird, vom Abstand des Zeitpunkts (t_{A}) zu der Referenz (t_{AS}) abhängt.

10. Verfahre nach einem der vorangehenden Ansprüche,
**dadurch gekennzeichnet, dass** in einer ersten Phase (P₁) eines Erregungszeitintervalls (I_{E}) eine ungetaktete Spannung (U) angelegt wird und in einer daran anschließenden zweiten Phase (P₂) eine getaktete Spannung (U) mit einem Tastverhältnis angelegt wird.

11. Verfahren nach Anspruch 10,
**dadurch gekennzeichnet, dass** nach Beginn der ersten Phase (P₁) ein Startzeitpunkt (t_{S}) ermittelt wird, zu dem der Kolben (20) beginnt, sich zu bewegen, und dass das Ende der ersten Phase (P₁) in Abhängigkeit von dem ermittelten Startzeitpunkt (t_{S}) festgelegt wird.

12. Verfahren nach Anspruch 11,
**dadurch gekennzeichnet, dass** das Ende der ersten Phase (P₁) so festgelegt wird, dass es im Bereich des Startzeitpunkts (t_{S}) liegt.

13. Verfahren nach Anspruch 11 oder 12,
**dadurch gekennzeichnet, dass** nach Ermitteln des Startzeitpunkts (t_{S}) in einem Erregungszeitinervall (I_{E}) die Länge der ersten Phase (P₁) für ein folgendes Erregungszeitintervall (I_{E}) in Abhängigkeit von dem ermittelten Startzeitpunkt (t_{S}) festgelegt wird.

14. Verfahren nach einem der Ansprüche 11 bis 13,
**dadurch gekennzeichnet, dass** der Startzeitpunkt (t_{S}) durch Überwachen des bei angelegter Spannung (U) fließenden Stroms (I) ermittelt wird.

15. Verfahren nach Anspruch 14,
**dadurch gekennzeichnet, dass** dann, wenn der Gradient des zeitlichen Stromverlaufs einen vorbestimmten Bereich oder Wert erreicht, darauf geschlossen wird, dass der Kolben (20) begonnen hat, sich zu bewegen.

## Claims

1. A method for operating a dosing pump, in particular for delivering fuel for a vehicle heating device, the dosing pump (14) comprising a piston (20), moveable between two end positions for delivering, and a driving unit (28, 30) associated therewith which is electrically excitable by applying a voltage (U), the method comprising the following measures:
a) applying a voltage (U) for moving the piston (20) towards an end position during excitation time intervals (I_{E}), a total delivering volume of the dosing pump being determined by a clock frequency, by which the excitation time intervals succeed each other,
b) determining whether the piston (20) has during excitation time intervals (I_{E}) reached a position at or near an end position and determining the point in time (t_{A}) during the excitation time interval (I_{E}) when the piston (20) has reached the position at or near the end position,
c) comparing the point in time (t_{A}) determined in step b) with a reference (t_{AS}),
d) then, if the interval between the point in time (t_{A}) and the reference (t_{AS}) is above a certain threshold, applying a modified voltage for varying the point in time (t_{A}) towards the predetermined reference (t_{AS}).

2. The method according to claim 1,
**characterized in that** measure b) is taken for an excitation time interval (I_{E}) succeeding that excitation time interval (I_{E}), during which the point in time (t_{A}) has been determined and has been compared with the reference (t_{AS}) by carrying out measures a) to c).

3. The method according to claim 1 or 2,
**characterized in that** during step b) the position at or near the end position is reached by monitoring the flow of electric current (I) when applying the voltage (U).

4. The method according to claim 3,
**characterized in that** it is assumed that this position has been reached when the gradient of the flow of the current in time has reached a predetermined range or value.

5. The method according to one of claims 1 to 4,
**characterized in that** measure d) comprises modifying the mean voltage for varying the point in time (t_{A}).

6. The method according to one of claims 1 to 5,
**characterized in that** during an excitation time interval (I_{E}) the voltage (U) is at least periodically applied in a clocked manner with a duty cycle and **in that** measure b) comprises modifying the duty cycle for varying the point in time (t_{A}).

7. The method according to claim 6,
**characterized in that**, if the point in time (t_{A}) in relation to the reference (t_{AS}) occurs too late, the duty cycle is increased, and **in that**, if the point in time (t_{A}) in relation to the reference (t_{AS}) occurs too early, the duty cycle is reduced.

8. The method according to one of claims 1 to 7,
**characterized in that** the reference (t_{AS}) used in measure c) is a point in time or a time period near the end of the excitation time interval (I_{E}).

9. The method according to one of claims 1 to 8,
**characterized in that** in measure d) the extent to which the voltage (U) is varied depends on the interval between the point in time (t_{A}) and the reference (t_{AS}).

10. The method according to one of the preceding claims
**characterized in that** during a first phase (P₁) of an excitation time interval (I_{E}) an unclocked voltage (U) is applied and during a subsequent second phase (P₂) a clocked voltage (U) with a duty cycle is applied.

11. The method according to claim 10,
**characterized in that** after the beginning of the first phase (P₁) a starting point (tₛ) is established, when the piston (20) starts moving, and **in that** the end of the first phase (P1 ) is selected depending on the established starting point (tₛ).

12. The method according to claim 11,
**characterized in that** the end of the first phase (P1) is selected such that it occurs around the starting point (tₛ).

13. The method according to claim 11 or 12, **characterized in that** after establishing the starting point (tₛ) in an excitation time interval (I_{E}) the duration of the first phase (P₁) for a subsequent excitation time interval (I_{E}) is selected depending on the established starting point (tₛ).

14. The method according to claim 11 or 13, **characterized in that** the starting point (tₛ) is established by monitoring the current (I) flowing when the voltage (U) is applied.

15. The method according to claim 14,
**characterized in that** when the gradient of the flow of the current in time has reached a predetermined range or value, it is assumed that the piston (20) has started moving.

## Revendications

1. Procédé permettant d'opérer une pompe doseuse, en particulier de refouler le combustible dans le cas d'un appareil de chauffage d'un véhicule à moteur, ladite pompe doseuse (14) comportant un piston (20), qui exerce un mouvement de va-et-vient entre deux fins de course, et une unité d'entraînement (28, 30) qui lui est affectée et qui est électriquement excitable par application d'une tension (U), ledit procédé comprenant les mesures suivantes :
a) appliquer une tension (U) pour la mise en mouvement du piston (20) en direction d'une fin de course durant des intervalles d'excitation (I_{E}), le volume de transport total de la pompe doseuse étant déterminé par la fréquence de cycle avec laquelle les intervalles d'excitation se succèdent,
b) constater si le piston (20) a atteint une position de fin de course ou s'en approche au cours d'un intervalle d'excitation (I_{E}) et déterminer le moment (t_{A}) au cours de l'intervalle d'excitation (I_{E}) auquel le piston (20) a atteint cette position ou s'en trouve proche,
c) comparer le moment (t_{A}) déterminé par la mesure b) avec une valeur de référence (t_{AS}),
d) lorsque la différence entre le moment (t_{A}) et la valeur de référence (t_{AS}) est supérieure à un seuil prédéfini, appliquer une tension différente pour décaler le moment (t_{A}) vers la valeur de référence prédéfinie.

2. Procédé selon la revendication 1,
**caractérisé en ce que** la mesure b) est prise pour un intervalle d'excitation (I_{E}) qui suit l'intervalle d'excitation (I_{E}) durant lequel le moment (t_{A}) a été déterminé au moyen des mesures a) à c) et a été comparé à la valeur de référence (t_{AS}).

3. Procédé selon les revendications 1 ou 2,
**caractérisé en ce que** lors de l'étape b), la position de fin de course ou à proximité de la fin de course est atteinte en surveillant le courant (I) circulant lors de l'application de la tension (U).

4. Procédé selon la revendication 3,
**caractérisé en ce que** l'on conclut que la position a été atteinte, lorsque le gradient de la progression du courant a atteint une zone ou une valeur prédéfinie.

5. Procédé selon l'une des revendications 1 à 4,
**caractérisé en ce que** la mesure d) comprend la modification de la tension moyenne pour décaler le moment (t_{A}).

6. Procédé selon l'une des revendications 1 à 5,
**caractérisé en ce que** durant un intervalle d'excitation (I_{E}) la tension (U) est appliquée au moins par phase en fonction d'un facteur d'utilisation et que la mesure b) comprends la modification du facteur d'utilisation pour décaler le moment (t_{A}).

7. Procédé selon la revendication 6,
**caractérisé en ce que**, lorsque le moment (t_{A}) intervient trop tard par rapport au moment de référence (t_{AS}), le facteur d'utilisation est augmenté et **caractérisé en ce que**, lorsque le moment (t_{A}) intervient trop tôt par rapport au moment de référence (t_{AS}), le facteur d'utilisation est baissé.

8. Procédé selon les revendications 1 à 7,
**caractérisé en ce que** le moment de référence (t_{AS}) employé dans la mesure c) est un moment ou une plage proche de la fin de l'intervalle d'excitation (I_{E}).

9. Procédé selon les revendications 1 à 8,
**caractérisé en ce que**, pour la mesure d), le degré de modification de la tension (U) dépend de l'intervalle entre le moment (t_{A}) et le moment de référence (t_{AS}).

10. Procédé selon l'une des revendications précédentes,
**caractérisé en ce qu'**une tension (U) non cadencée est appliquée lors d'une première phase (P₁) d'un intervalle d'excitation (I_{E}) et qu'une tension (U) cadencée en fonction d'un facteur d'utilisation est ensuite appliquée lors d'une deuxième phase (P₂) qui suit la première.

11. Procédé selon la revendication 10,
**caractérisé en ce qu'**après le début de la première phase (P₁), est déterminé le moment du démarrage (t_{S}) où le piston (20) commence à se mettre en mouvement et **caractérisé en ce que** la fin de la première phase (P₁) est fixée en fonction du moment du démarrage (t_{S}) déterminé.

12. Procédé selon la revendication 11,
**caractérisé en ce que** la fin de la première phase (P₁) est fixée de telle sorte qu'elle soit proche du moment du démarrage (t_{S}).

13. Procédé selon les revendications 11 ou 12,
**caractérisé en ce qu'**après détermination du moment du démarrage (t_{S}) dans un intervalle d'excitation (I_{E}), la longueur de la première phase (P₁) est déterminée pour l'intervalle d'excitation (I_{E}) suivant en fonction du moment du démarrage déterminé.

14. Procédé selon les revendications 11 à 13,
**caractérisé en ce que** le moment du démarrage (t_{S}) est déterminé grâce à la surveillance du courant (I) circulant lorsque la tension (U) est appliquée.

15. Procédé selon la revendication 14,
**caractérisé en ce que**, lorsque le gradient de la progression du courant atteint une plage ou valeur prédéfinie, on considère que le piston (20) a commencé à se mettre en mouvement.
